# EUROPEAN PATENT APPLICATION

(11) **EP 0 673 763 A1**
(43) Date of publication of application: **27.09.1995**
(21) Application number: 94104737.5
(22) Date of filing: 24.03.1994
(51) Int. Cl.: B32B 31/00, B32B 7/04, B63H 21/30, B63B 5/24

(54) **Multi-layered damping panel, watercraft therefrom and method for manufacturing same**

(71) Applicant: YAMAHA HATSUDOKI KABUSHIKI KAISHA, Iwata-shi Shizuoka-ken, 438 (JP)
(72) Inventor: Oka, Ryusuke, Hamana-gun, Shizuoka-ken (JP)
(74) Representative: Grünecker, Kinkeldey, Stockmair & Schwanhäusser Anwaltssozietät

(57) **Abstract**

The present invention relates to a multi-layered damping panel, a watercraft, the hull material comprises such panel and a method for manufacturing such a damping panel having superior noise and vibration characteristics. The panel comprises a base plate (12) potentially laminated with a coloured resin layer (15) to provide certain surface appearance effects, said base plate (12) being followed by a cushioning layer (13) which is covered by at least a top restraint plate (14) the thickness of which is considerably lower than that of the base plate (12). Moreover, at least one of the layers comprises holes (16) or recesses to accommodate any excess resin from the bonding of the layers to each other. Moreover, method aspects for manufacturing such a panel and use aspects for using such a panel as element of a hull configuration of a watercraft are explained.

## Description

The present invention relates to a multi-layered damping panel, a watercraft comprising a hull, the hull material thereof is at least partially made thereof and to a method for manufacturing such a multi-layered damping panel, which preferrably incorporates fibreglass reinforced plastic as one of its materials.

There are many instances where it is desirable to provide a panel in a construction that has damping characteristics so as to reduce noise and vibration transmission through the panel. For example, these panels are frequently employed in watercraft hull configurations for dampening the sounds and vibration of the engine and/or propeller or other propulsion device from the occupants of the watercraft.

Normally, the way such damping plates are formed is to lay up or otherwise form a fibreglass reinforced plastic base plate and to affix to that base plate a damping plate having a cushioning property such as rubber or a plastic having rubber-like characteristics. Frequently, it is also desirable if not necessary to provide another retention panel on the side of the damping panel opposite to that attached to the base plate for appearance, structural and other reasons. Such sandwich-type constructions, however, have certain disadvantages.

That is, with the previously proposed structures, the cushioning layer must have a thickness equal to or greater than both the base plate and the facing plate. As a result, weight and volume increase which is not at all desirable.

The construction of damping panels of the type described normally consists of forming the base plate and then bonding the cushioning plate to the base plate by means of an adhesive or the like. However, these panels have relatively large surface areas and it is difficult to ensure that the adhesive forms a complete bond between the base plate and the damping plate. Where a further plate is positioned on the opposite side of the damping plate from the base plate, then the problems of bonding becomes significantly increased.

If the surfaces are not completely secured to each other throughout their entire surface, then there will be weak parts occur which can cause separation of the damping plate and not only a decrease in strength, but also a decrease in the damping performance.

Accordingly, it is an objective of the present invention to provide an improved damping panel having a light weight, the necessary structural properties and superior damping characteristics.

Moreover, it is an objective of the present invention to provide a watercraft having a light weight hull configuration which provides noise and vibrations damping characteristics between an engine compartment and a passenger compartment closely adjacent to each other.

Finally, it is an objective of the present invention to provide an improved manufacturing process for such damping panels that will ensure complete adhesion of the damping material to a base plate while simplifying the manufacturing process.

According to the present invention the afore-indicated objective regarding the provision of a light weight damping panel having improved inherent constructional integrity is performed in that at least one of the adjacent cooperating surfaces of the components of the panel bonded to each other comprises recesses which form reservoirs for accommodating excess bonding agent material therein.

In this way it is assured that the adhesive can be easily dispersed by applying pressure to the surfaces to be joined and the adhesive may then flow into the recesses or bores, so as to ensure a uniform spread without pockets being formed.

According to the present invention the afore-indicated objective regarding the improvement of a hull body of a watercraft is performed in that an engine compartment, at least in parts, is formed by composite damping plates comprising a base plate, a cushioning layer and a restraint plate wherein corner portions between bottom and side wall sections or side wall top sections are free of the cushioning layer.

Such a construction renders the hull configuration of the watercraft shock and sound absorbing, but facilitates manufacturing by means of avoiding difficulties from the thicker composite damping plates to arise in the corner portions thereof. By means of at least partially designing the walls of the engine compartment from such damping plates the transmission of vibrations and sound from the engines to the passengers in the passenger compartment can be drastically reduced.

Finally, the above indicated objective in terms of a method for manufacturing damping panels as indicated above, according to the present invention is performed in that an adhesive material is applied to at least one of the facing surfaces of the cushioning layer and the base plate, then the base plate and the cushioning layer are placed in engagement with each other (at least one of which having recesses), while air bubbles are dispelled before the adhesive material solidifies and that an adhesive is applied to at least one of the facing surfaces of the cushioning layer and the restraint plate and that the restraint plate is laminated to the cushioning plate.

Preferrably, said method is performed in a mold and an adhesive of unsaturated polyester resin is applied to the upper surface thereof, before the cushioning layer is laminated to which an urethane primer is applied at both sides. Finally, the restraint plate is attached to the cushioning layer, preferrably applying unsaturated polyester resin on the cushioning layer before laminating the restraint plate.

Further preferred embodiments of the present invention are let down in the further subclaims.

In the following the present invention is explained in greater detail by means of several embodiments thereof in conjunction with the accompanying drawings wherein:
Figure 1 is a cross-sectional view taken through a damping panel constructed in accordance with embodiment of the invention,
Figure 2 is a perspective view showing the layer of cushioning material,
Figure 3 is a view, in part similar to Figure 1, but on an enlarged scale,
Figure 4 is a view, in part similar to Figure 3, and shows the configuration of the panel when it is deflected,
Figure 5 is a cross-sectional view through a damping panel according to yet another embodiment of the present invention,
Figure 6a - 6d showing schematically the manufacturing process of the damping panel of the embodiment of Figure 1,
Figure 7 is a side elevational view of a watercraft constructed in accordance with the utilisation of cushioning panels formed in conjunction with the invention,
Figure 8 is a top plan view of the watercraft,
Figure 9 is a rear elevational view of the watercraft,
Figure 10 is an enlarged cross-sectional view, in part similar to Figure 1, and shows another type of construction including additional facing materials,
Figure 11 is an enlarged cross-sectional view showing how a pair of the damping panels may be affixed to each other at joints to form the hull.

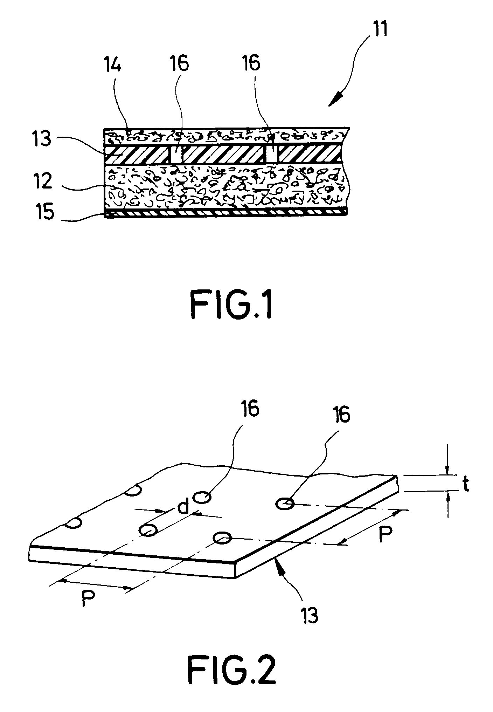

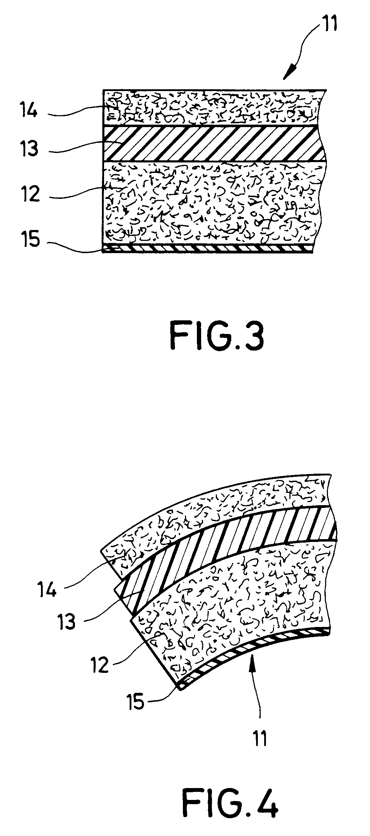

Referring now in detail to the drawings and initially to Figures 1-4, a damping panel constructed and manufactured in according with an embodiment of the invention is identified generally by the reference numeral 11. The panel 11 is comprised of a base plate layer 12 formed from a fibreglass reinforced plastic of any known type and which may be formed either from a laid-up or sprayed method.

A layer 13 of a suitable cushioning material having rubber or being formed from a plastic having rubber-like sound dampening characteristics is affixed by adhesive bonding to the base layer 12. A suitable material for the damping layer 13 may be a copolymer of vinyl chloride and vinyl acetate which is extremely effective at normal temperatures such as 20^{o}C. when such a copolymer is used, it is preferable to apply a urethane-based primer as an adhesive on the surface of the damping 13 before it is adhered to the base layer of plate 12.

A further restraining layer 14 of a more rigid material, preferably a further fibreglass reinforced plastic layer is affixed by an adhesive bonding or the like to the side of the cushioning layer 13 opposite that of the base plate 12. In the preferred constructions, the restraining layer or plate 14 has a thickness that is substantially less than the thickness of the base plate 12 and which is no greater than that of the cushioning layer 13. In a specific embodiment of the invention, the base layer 12 may have a thickness of 10mm while the damping layer 13 and restraining layer 14 have thickness of 2mm each.

For appearance purposes, a gel coat layer 15 may be laminated to the outer surface of the base plate 12. When used in a hull construction, the gel coat 15 will face outwardly while the restraining plate 14 will face inwardly. If desired, a gel coat layer may also be laminated to the outer surface of the restraining plate 14.

Because of the fact that the restraining plate 14 is relatively thin compared to th base plate 12, the structure has sufficient flexibility so that it can easily bend under loads as shown in Figure 15. When this is done, a shearing action will occur at the interface between the layers 12, 13 and 14 so as to generate heat and assist in the damping.

It has already been noted that the layers 12, 13 and 14 are secured to each other by an adhesive bond. When this is done, it is desirable, if not imperative, to form a full bond over the entire surfaces. This requires complete dispersion of th adhesive material along th surfaces of th parts to be bonded. This is difficult when large surface areas are employed, such as surface areas that are 1 meter or more in dimension. In order to ensure complete dispersion of the adhesive, the cusioning layer 13 is provided with a number of small throughholes 16 so that the adhesive can be easily dispersed by applying pressure to the surfaces to be joined. The adhesive may then flow into the hole 16 so as to ensure a uniform spread without pockets being formed. In a specific embodiment, the pitch P between the holes 16 may be approximately 50mm while the diameter d of the holes may be about 5mm or less. Of course, other techniques may be employed.

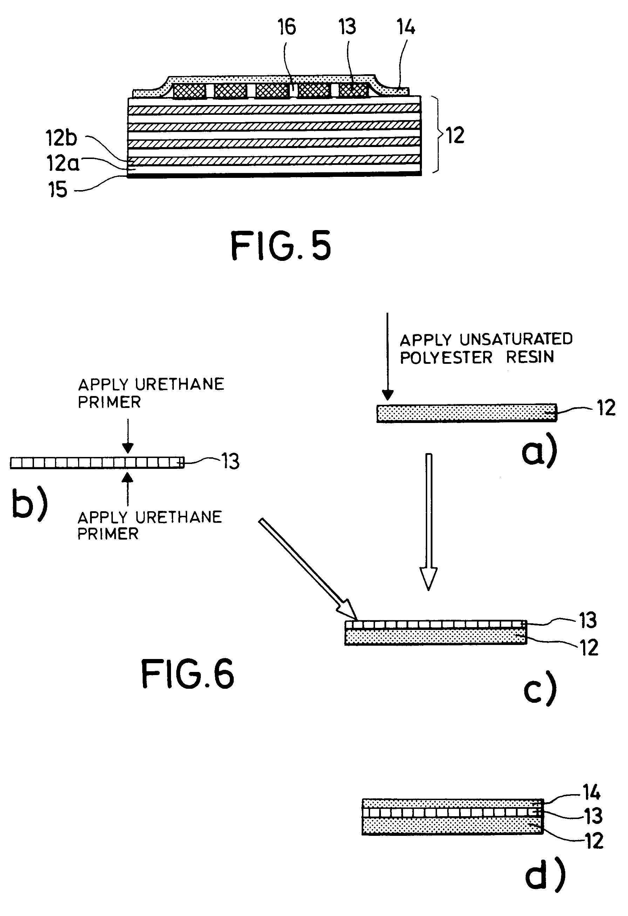

A specific manufacturing process as examplified in Figure 6 which may be employed for forming the damping panel 11 may comprise the formation first of the gel coat layer 15 over which the base plate layer 12 is laminated either by a hand laying up method or by a spraying method. With the laying up method, a sheet of fibreglass weaving is set in a mold and a suitable resin succh as unsaturated polyester is applied to impregnate this base and then short fibres are sprayed, and a further impregnation with a resin follows. This process may be repeated several times to form the desired thickness. During this lamination, air bubbles are dispelled between each layer in any known manner.

Before the setting up of the base plate 12 is completed, the cushioning layer 13 is disposed over it with an adhesive, if cushioning layer 13 is disposed over it with an adhesive, if desired, and a rolling action follows so as to ensure complete dispersion of the resin across the surface of the cushioning plate 13 with the excess liquid material being forced into the openings 16. Although a hand laying up method has been descried, a spray up method also can be employed for forming the base plate 12.

The restraining plate 14 is then formed either by the hand laying up or spraying up method. Preferably, this also can be done and another rolling action completed before the material is set up so as to assure good bonding to th other side of the cushioning layer 13. Again, an adhesive can be employed if desired. In fact, it is preferable to apply a urethane based primer which will act as an adhesive between the respective surfaces.

The afore-indicated manufacturing process of a damping panel of the afore-indicated type is schematically shown in Figures 6a-6d, wherein at first a base plate layer 12 of fibreglass reinforced plastic is formed to which unsaturated polyester resin as adhesive is applied at the top surface for laminating the cushioning layer, which may separately be formed, preferrably from a plastic having rubber-like sound and vibration damping characteristics. For improving adhesion of said damping material preferrably urethane primer is applied to both surfaces of said cushioning material 13 and is allowed to dry before attaching same to the base plate 12. Preferrably, when the surfaces are dried to such an extent that they are not sticky the cushioning layer 13 is used and it is even possible to use the material even after letting same sit for about a week after drying. In this way, excellent bonding capabilities with respect to the base plate 12 below and a restraint plate or restraining layer 14 above can be obtained.

Before the setting up of the base plate 12 is completed the cushioning layer 13 is laminated in succession over the base plate 12 under pressure dispelling air bubbles before the polyester resin of the base plate 12 solidifies. Then, preferrably after applying unsaturated polyester resin on the upper surface of the cushioning layer 13 the restraining plate 14 is laminated under pressure. As in this case the cushioning layer 13 is provided with vertical through holes as schematically indicated in Figure 6b complete dispersion of the resin and adhesives across the surfaces of the cushioning plate 13 can be assured with the excess material being forced into said through holes.

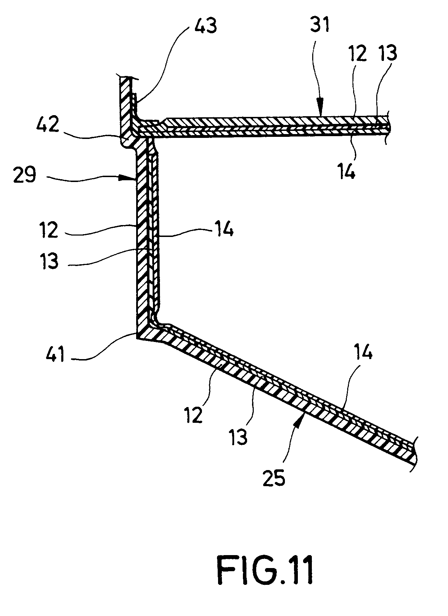

Another embodiment of the damping panel according to the present invention is shown in Figure 5. In that case, the thickness of the base plate 12 considerably exceeds that of the cushioning layer 13 and the restraint cover plate or restraining layer 14 at the top. Such damping panels are particularly useful for designing hull portions of the watercraft, specifically in a corner area of the hull as explained hereinafter in conjunction with Figure 11.

From Figure 5 the formation and composition of the base plate 12 is derivable in greater detail. Beyond the gel coat layer 15 formed by coloured resin the base plate layer 12 is laminated which in turn is composed of successively laminated mats and rovings successively stacked alternatingly, said rovings are formed by mesh-like woven glass fibres (fibreglass weaving) which is impregnated with polyester resin while the intermediate mats are formed by glass fibres without directional property further impregnated with polyester resin as well.

Accordingly, said impregnated mats and rovings are stacked in succession and laminated while depressing same with a brush or roller. In this way, the base plate 12 is formed as already indicated above.

Then the cushioning layer 13 having the through holes 16 is laminated to the upper impregnated mat, said cushioning layer 13 was treated from both sides with a primer such as urethane primer in order to obtain superior bonding quality throughout the damping panel. In this embodiment, considering further use of said damping panel, for example, to establish a corner portion of the hull of a watercraft the cushioning layer 13 is shorter than the base plate 12 so that at a peripheral area of the base plate only the upper restraining layer 14 is provided while that area is free of a cushioning layer 13. In this way, the further use of said damping panel in areas were continuous base plate portions define a certain angle to each other is facilitated.

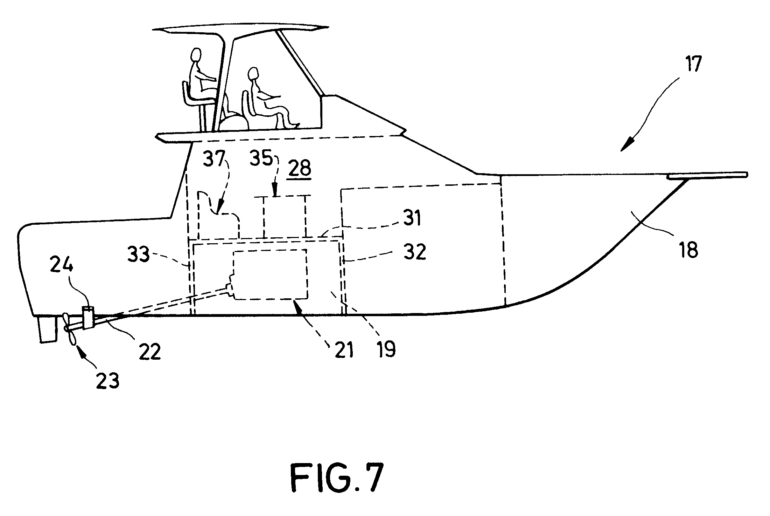

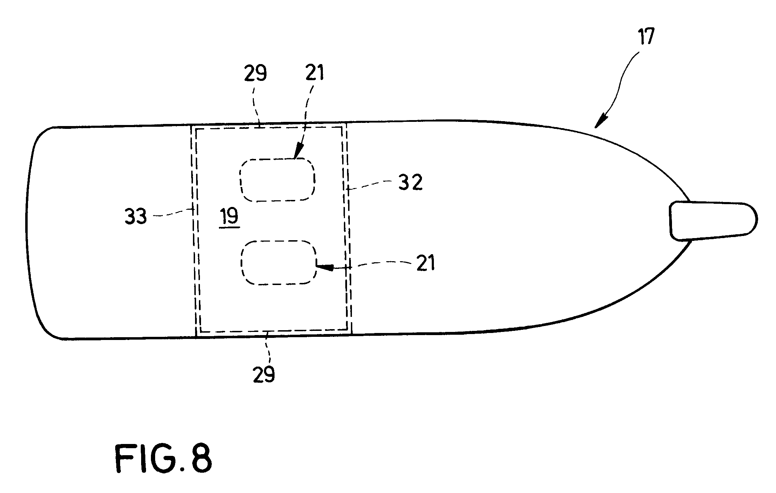

As has been noted, damping panels constructed in accordance with the invention are particularly adapted for use in sound and vibration insulation in the watercraft and Figures 7-9 show a watercraft and how these panels can be utilised for this purpose. In the illustrated embodiment, the watercraft is identified generally by the reference numeral 17 and is comprised of an outer hull 18. The outer hull 18 may be formed from a suitable material, such as the fibreglass reinforced resin, such as the base plate 12, although certain components may be formed from the damping panels as will be described. The hull 18 forms an engine compartment 19 in which a pair of powering internal combustion engines 21 are positioned. The engines 21 drive a pair of propeller shafts 22 to which screw-type propellers 23 are affixed for propelling the watercraft 17 in a well-known manner. The propeller shafts 22 are journalled in respective bearing blocks 24 formed at the rear underside of the hull 18.

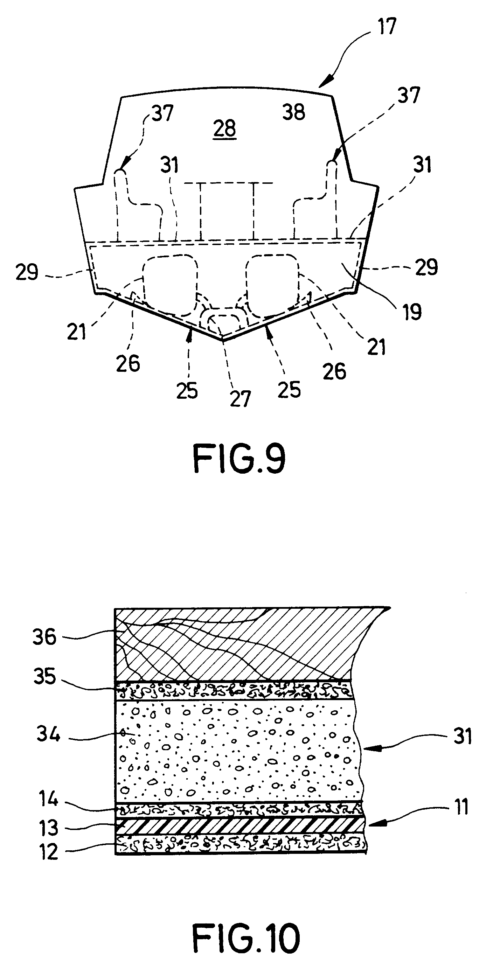

As may be best seen in Figure 9, the underside of the hull has a V bottom, as indicated at 25 and this portion of the hull may be formed solely from a fibreglass reinforced plastic or from a composite damping plate. Pairs of engine mounts 26 and 27 support the engines 21 on this V bottom 25 in a well-known manner.

The engine compartment 19 underlies a cabin or passenger's compartment 28 and the engines 21 obviously create vibrations which should be dampened from the passenger compartment 28. For this purpose, the engine compartment 19 is defined by side walls 29 that merge into and are connected to the V bottom portions 25, a top wall 31, which also forms a floor for the passenger's compartment 28, and front and rear walls 32 and 33, respectively. All of these walls 29, 31, 32 and 33 are formed from damping panels of the type previously described.

The side plates 29 and the bottom plate 25, if it is also formed as a damping panel, which can be done, are disposed so that their gel coat layers 15 face outwardly against the body of water in which the watercraft is operating. With such a construction, the base plate 12 may, as previously described, have a thickness of approximately 10mm while the cushioning layer 13 and restraining plate 14 may both have a thickness of approximately 2mm. By forming the entire V bottom 25 from a damping plate, the vibration of the propellers 23 will also be isolated from the passenger's compartment 28 and the other interior portions of the watercraft. The front and rear wall 32 and 33 are also formed from damping plates as desribed, but these also be encased within plywood plates that are properly affixed thereto by adhesive so as to provide the desired interior finish with the watercraft.

Figure 10 is a cross-sectional view which shows how the bottom plate 31 may be formed considering that it is also the floor of the passanger's compartment 28. As may be seen in Figure 10, the top wall 31 is comprised of a damping plate 11 as previously described but the gel coat layer 15 is not neccessarily required in this construction. However, there is provided a base plate layer 12 and the cushioning layer 13 may both have the same thickness of approximately 2mm while the restraint plate layer 14 has a lesser thickness of about 1.5mm.

Overlayed on the restraint plate layer 14 and affixed thereto, as by being formed or bonded in place is a thicker layer, indicated generally by the reference numeral 34 which is formed from a foamed plastic so as to afford further sound depending. This foamed plastic may have a thickness of approximately 20mm and is overlayed by a further fibreglass reinforced plastic layer 35 which can have a thickness also of approximately 2mm. Laid on top of the fibreglass reinforced plastic layer 35 is a plywood or wood layer 36 which has a thickness of approximately 10mm.

This floor layer 31 as thus far described may afford support within the passenger compartment for seats or sofas 37 and a table 38. Of course, other forms of passenger compartments may be employed.

Figure 11 is a cross-sectional view of the left-hand side of the hull as shown in Figure 7 on an enlarged scale and shows in more detail how the various hull configuration can be made using the damping plates as thus far described. The hull underportion 25 and side wall 29 may be integrally connected to each other and this is done by having their base plates 12 being formed from the same material without a joint therein. The cushioning layers 13 are disposed only on the vertical and undersides and the corner 41 where they are jointed is provided without any cushioning layer 14 so as to make a neater joint and also to afford greater strength. The floor or top layer 31 overlies and is supported on a step 42 formed at the upper end of the side wall 29 and a gap is formed at the corner of this joint which is filled with a suitable sealant 43. As a result of this construction, the hull inner surface will have a smooth configuration and be wrinkle-free and yet the overall construction will provide effectie sound and vibration damping. Also, because of the method of fabrication which has been described, the structure will have high strength and there will not be any separation between the various layers.

It should be readily apparent that the foregoing description is that of the preferred embodiments of the invention and that various changes and modifications may be made without departing from the spirit and scope of the invention, as defined by the appended claims.

## Claims

1. Multi-layered damping panel, specifically hull material for watercrafts, comprising a base plate (12), a cushioning layer (13) laminated through a bonding agent to the base plate (12) and at least one cover plate (14) attached to the cushioning layer, **characterised in that** at least one of the facing adjacent surfaces of the components of the panel bonded to each other comprises recesses (16) which form resevoirs for accommodating excess bonding agent material therein.

2. Damping panel as claimed in claim 1, **characterised in that**, the cushioning layer (13) comprises perforations.

3. Damping panel as claimed in claims 1 or 2, **characterised in that**, the cushioning layer (13) comprises a plurality of spaced apart holes (16).

4. Damping panel as claimed in at least one of the preceding claims 1 to 3, **characterised in that**, said cover plate comprising an integral restraint plate (14) the thickness of which is less than that of the base plate (12).

5. Damping panel as claimed in claim 4, **characterised in that** the thickness of the restraint plate (14) corresponds to that of the cushioning layer (13).

6. Damping panel as claimed in at least one of the preceding claims 1 to 5**, characterised in that** the outer surface of the base and/or cover plates (12,14) is formed by a thin gel coating plate (15) bonded to the base and/or cover plates (12,14) and determining the appearance thereof.

7. Damping panel as claimed in at least one of the preceding claims 1 to 6, **characterised in that**, said cover plate comprising a composite multi-layered assembly (31) including a first restraint plate (14) attached to a first cushioning layer (13), a second cushioning layer (34) attached to the first restraint plate (14), the thickness of said second cushioning layer (34) considerably exceeding that of the first cushioning layer (13), a second restraint plate (35) attached to the second cushioning layer (34) and an upper wooden cover plate (36) attached to the second restraint plate (35).

8. Damping panel as claimed in at least one of the preceding claims 1 to 7, **characterised in that**, the base plate (12) comprises a plurality of successively stacked rovings (12b) of mesh-like woven glass fibres and mats (12a) of glass fibres without directional properties.

9. Damping pad as claimed in claim 8, **characterised in that**, the cushioning layer (13) is shorter than the base plate (12) and that the restraint plate (14) covers the cushioning layer (13) at a peripheral area of the base plate (12), not covered by the cushioning layer (13).

10. Damping pad as claimed in at least one of the preceding claims 1 to 9, **characterised in that**, the base plate (12) and the restraint plate (14) are made up of a fibreglass reinforced plastic.

11. Damping pad as claimed in at least one of the preceding claims 1 to 10, **characterised in that** the cushioning layer (13) is bonded to the base and/or restraint plates (12,14) before said base and/or restraint plates (12,14) are cured completely.

12. Damping pad as claimed in at least one of the preceding claims 1 to 11, **characterised in that** urethane primer or unsaturated polyester resin are used as bonding agents or adhesives between the base plate (12), cushioning layer (13) and restraint plate (14).

13. Damping pad as claimed in at least one of the preceding claims 1 to 12, **characterised in that** the cushioning layer (13) is formed from a copolymer of vinyl chloride and vinyl acetate.

14. Watercraft comprising a hull portion (18) made of fibreglass reinforced resin defining an engine compartment (19) beneath a passanger's compartment (28) , **characterised in that** the engine compartment (19), at least partially, being formed by composite damping plates (11) comprising a base plate (12), a cushioning layer (13) and a restraint plate (14) wherein corner portions between bottom and side wall sections or side wall and top sections are free of the cushioning layer (13).

15. Watercraft as claimed in claim 14, **characterised in that** the bottom plate (31) of separating the passanger's compartment (28) from the engine compartment (19) being formed from a multi-layered damping plate (11) comprising a lowermost bottom plate (12) made of fibreglass reinforced plastic followed by a cushioning layer (13) and followed by a restraint plate (14) of fibreglass reinforced plastic, followed by a second cushioning layer (34) of foamed plastic the thickness of which exceeds that of the first cushioning layer (13) and being overlayed by another second restraint plate (35) of reinforced plastic which is covered by a plywood or wood layer (36) forming the top of the bottom plate (31) of the passenger's compartment (28).

16. Method of manufacturing a damping panel which is composed in succession at least of a base plate (12), a cushioning layer (13) and a restraint cover plate (14), preferrably for manufacturing a damping plate as clawed in claim 1, **characterised in that** an adhesive material is applied to at least one of the facing surfaces of the cushioning layer (13) and the base plate (12), at least one of said surfaces having holes (16), then the base plate (12) and the cushioning layer (13) are placed in engagement with each other while air bubbles are dispelled before the adhesive material solidifies, and that an adhesive is applied to at least one of the facing surfaces of the cushioning layer (13) and the restraint plate (12) and that the restraint plate is laminated to the cushioning plate.

17. Method as claimed in claim 16, **characterised in that** the base plate is formed by impregnating mats (12a) composed of glass fibres without directional property and rovings (12b) of mesh-like woven glass fibres, respectively, with polyester resin, stacking same in succession and laminating same to each other while depressing same with a brush or roller.
